# EUROPEAN PATENT SPECIFICATION

(11) **EP 2 670 160 B1**
(45) Date of publication and mention of the grant of the patent: **08.07.2015**
(21) Application number: 13169538.9
(22) Date of filing: 28.05.2013
(51) Int. Cl.: H04Q 1/06

(54) **Cable management device in chassis**
Kabelverwaltungsvorrichtung im Gehäuse
Dispositif de gestion de câble dans un châssis

(30) Priority: 29.05.2012 TW 101119054
(43) Date of publication of application: 04.12.2013
(73) Proprietor: Tseng, Ching-Chao, Changhua County 509 (TW)
(72) Inventor: Chen, Ching-Sheng, 270 Yilan County (TW)
(74) Representative: Lang, Christian

(56) References cited:
- WO-A1-2011/100613
- US-A1- 2011 174 534
- US-A1- 2011 286 198

## Description

### BACKGROUND OF THE INVENTION

### (1) FIELD OF THE INVENTION

The present invention relates to a cable management device, and more particularly, to a cable management device used in a chassis so as to manage the cables of different types, positions and numbers.

### (2) DESCRIPTION OF THE PRIOR ART

Along with the progress of the transmission of information, the chassis is used widely for installation of different information technology (IT) devices. The conventional chassis does not have proper management so that the cables, wires are randomly installed to the chassis so that when one of the parts or cables needs to be replaced, the cables of other parts impede the replacement so that the users have to spend a lot of time to remove and re-install said other parts and the cables thereof. This improper management of the cables consumes too much time and needs to be improved.

The advanced technology requires more space in the chassis so as to meet the requirements of many cables and IT devices, and how to properly manage the cables becomes an important issue in this business. The conventional way to randomly connect the cables cannot have better heat dissipating feature and more electric energy wastes.

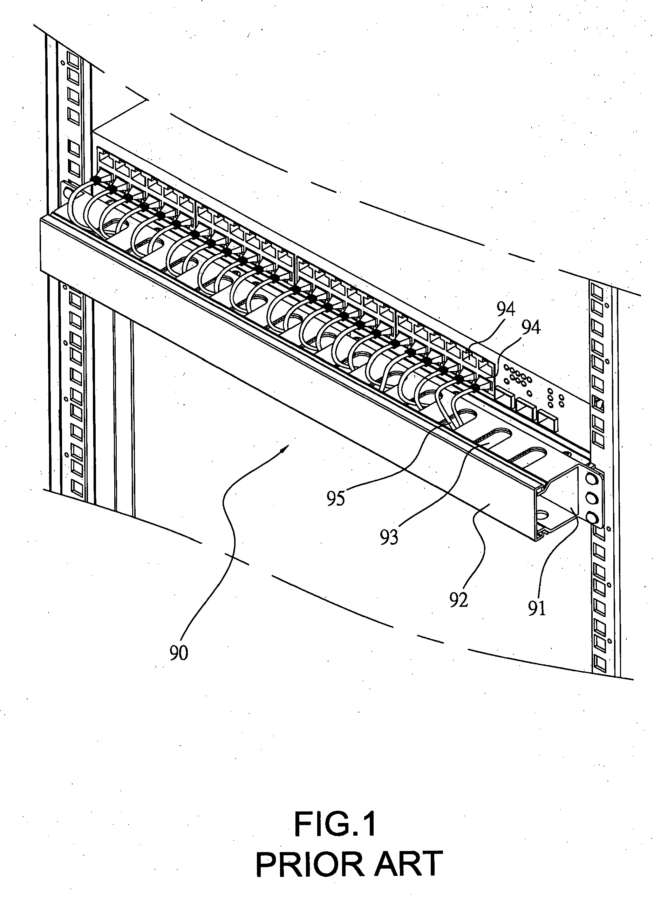

As shown in Fig. 1, the conventional cable management unit 90 includes an inverted U-shaped body 91 and an end board 92. The body 91 has multiple outlets 93 defined through two sides of the body 91. The cables are properly separated from each other by the outlets 93. The cable management unit 90 has a specific format wherein the different ports 94 have specific distances separated from each other. Different IT devices have different number and positions of ports so that when multiple IT devices are involved, the conventional cable management unit 90 cannot well manage the cables so that the heat cannot be removed and the IT devices can be damaged. In order to keep the proper temperature for these IT devices, more electric energy is needed.

In US 2011/286198 A1 another horizontal cable management unit is disclosed comprising a central section and a front cable routing section as well as a rear cable routing section wherein the cable routing sections have spaced fingers defining recesses for receiving cables. Similar to the above mentioned example said cable management unit has the disadvantages of a predefined number of recesses with predefined distances. However, for different electronic devices a cable management unit with a predefined number of recesses formed in predefined distances to each other may not be flexible enough. This can lead to the situation that multiple cables need to be received by a single recess, which makes the management of cables less organized with cables being in tight contact with each other and the result of bad heat dissipation and an eventual thread of severe damage of said cables or even the electronic devices due to overheating.

The present invention intends to provide a cable management device used in a chassis so as to improve the shortcomings of the conventional chasses.

### SUMMARY OF THE INVENTION

The present invention relates to a cable management device and comprises a frame connected to a chassis and two board-like cable management units are connected to two sides of the frame. Each cable management unit has multiple recesses and each recess communicates with an opening which is located away from the frame.

Preferably, the frame has two rails and the two cable management units are respectively and slidably engaged with the two rails.

Preferably, each of the cable management units has a connection portion which is slidably engaged with the rail so that the cable management unit is slidable along the rail.

Preferably, the connection portion includes two resilient tabs extending therefrom.

Preferably, each of the cable management units has multiple management boards and each management board has one recess and one opening.

Preferably, each of the management boards has a clip clipped thereon and the clip seals the opening.

Preferably, each of the clips has a clip portion and each of the management boards has an engaging portion to which the clip portion clips.

Preferably, each of the two cable management units is an L-shaped board which has a baseboard and a side board. The base board is connected to the frame.

Preferably, each of the two cable management units has a clip which is connected to the side board and seals the openings.

Preferably, each of the clips has a clip portion and each of the side boards has an engaging portion to which the clip portion clips.

Preferably, a cover is connected to the side boards and seals the openings.

Preferably, the cover has two hooked portions and each of the side boards has a protrusion which is engaged with the hook portion corresponding thereto.

The primary object of the present invention is to provide a cable management device which has multiple cable management units connected to a standard frame. The cables of each of the ports are located in the corresponding recesses (Per PORT Designed) to avoid the cables from being in contact with each other and have better heat dissipating feature.

Another object of the present invention is to provide a cable management device wherein the L-shaped management boards with recesses are provided to meet different requirements. The manufacturing cost can be reduced.

Yet another object of the present invention is to provide a cable management device wherein the clip seals the opening and the frame has a hollow portion to avoid the cable from being in contact with each other and to obtain better heat dissipating feature.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 shows the conventional cable management unit;
Fig. 2 is a perspective view to show the frame with rails and the cable management units of the present invention;
Fig. 3 is a perspective view to show multiple management boards on the rails, wherein each management board has one recess;
Fig. 4 is an exploded view to show the frame and multiple management boards on the rails as disclosed in Fig. 3;
Fig. 5 is an end view to show the frame and multiple management boards on the rails;
Fig. 6 shows another embodiment of the frame and multiple management boards on the rails;
Fig. 7 shows another embodiment of the L-shaped board of the present invention;
Fig. 8 shows the cover and the cable management unit of the present invention;
Fig. 9 is an end view to show the combination of the cover and the cable management unit of the present invention, and
Fig. 10 shows the cable management device of the present invention used in a chassis.

### DETAILED DESCRIPTION OF THE PREFERRED EMBODIMENTS

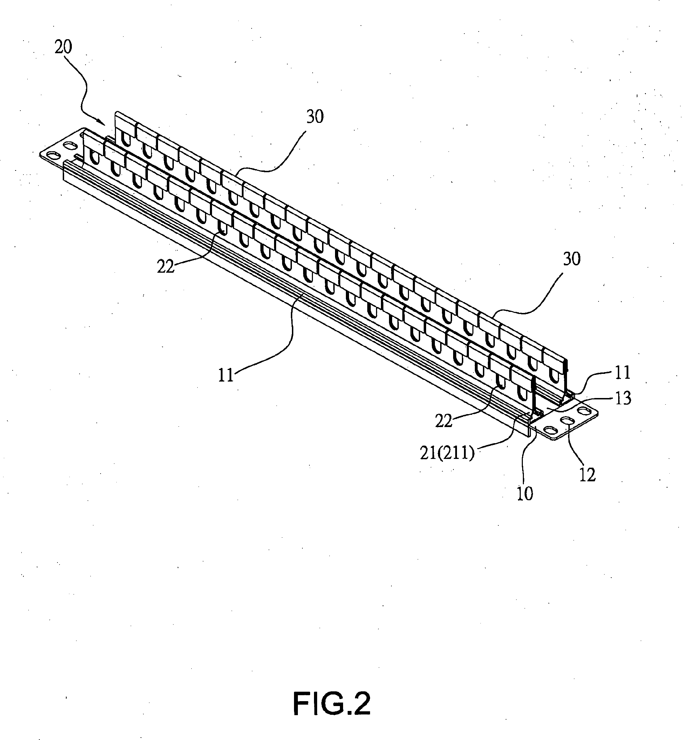

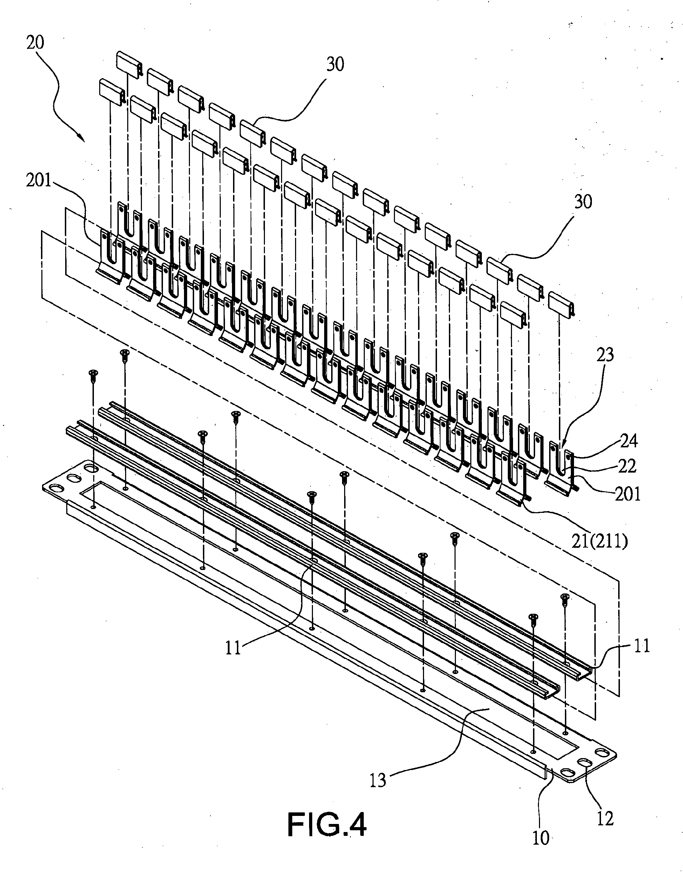

Referring to Figs. 2 to 6, the cable management device of the present invention comprises a frame 10 which meets the requirements of EIA-310D, and the frame 10 is connected to a chassis and equipped with proper number of recesses and one cable is engaged with one of the recesses.

The cable management device of the present invention comprises a frame 10 and two board-like cable management units 20. The frame 10 has multiple locking holes 12 defined in two sides thereof so that the frame 10 is connected to the chassis by the locking holes 12. The two respective sides of the two cable management units 20 are respectively connected to two sides of the frame 10. Each cable management unit 20 has multiple recesses 22 and each recess 22 communicates with an opening 23 which is located away from the frame 10. By multiple cable management units 20 connected to the frame 10, the cables are engaged with the recesses 22 corresponding thereto so that the cables are not in contact with each other and well managed. The well managed cables also provide better heat dissipating featu re.

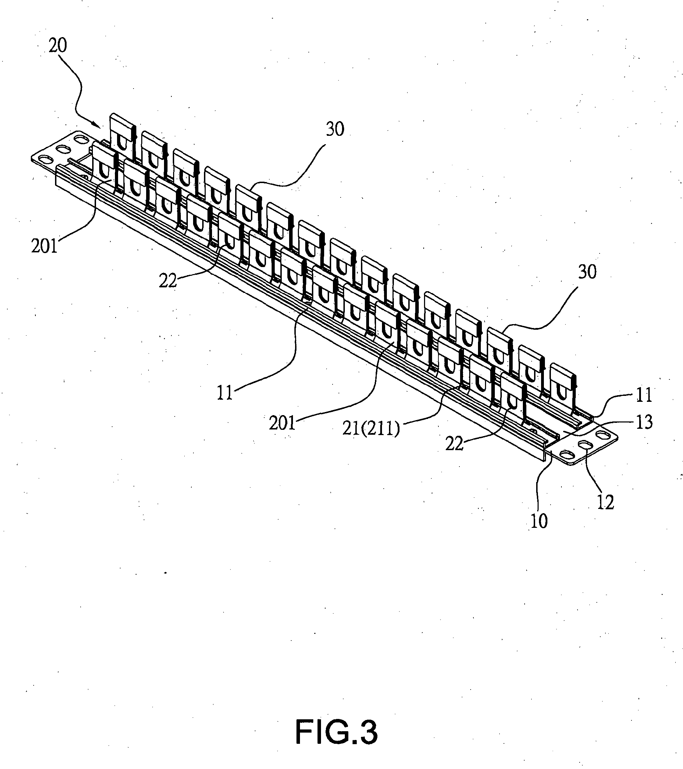

The frame 10 has two rails 11 and each of the cable management units 20 has a connection portion 21 which is slidably engaged with the rail so that the cable management unit 20 is slidable along the rail 11. In order to easily manage the cables according to the different ports, each of the cable management units 20 has multiple management boards 201 and each management board 201 has one recess 22 and one opening 23 as shown in Figs. 2 and 3. By this arrangement, the specific management boards 201 are chosen according to the types and positions of the ports and these management boards 201 are engaged with the rails 11 to obtain the optimal cable management. Each of the management boards 201 has a clip 30 clipped thereon and the clip 30 seals the opening 23. Each of the clips 30 has a clip portion 31 and each of the management boards 201 has an engaging portion 24 located beside the opening 23 so that the clip portion 31 clips the engaging portion 24. By the engagement between the clip portion 31 and the engaging portion 24, the clips 30 are connected to the management boards 201 and seal the openings 23 so that the cables extend through the recesses 22. Furthermore, the frame 10 has at least one hollow portion 13 to have better ventilation and increase the efficiency of heat dissipation.

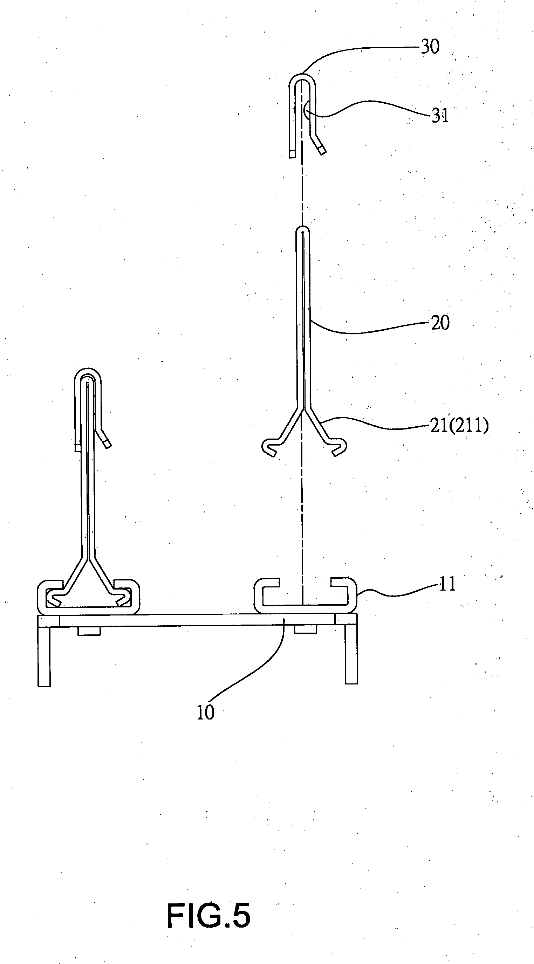

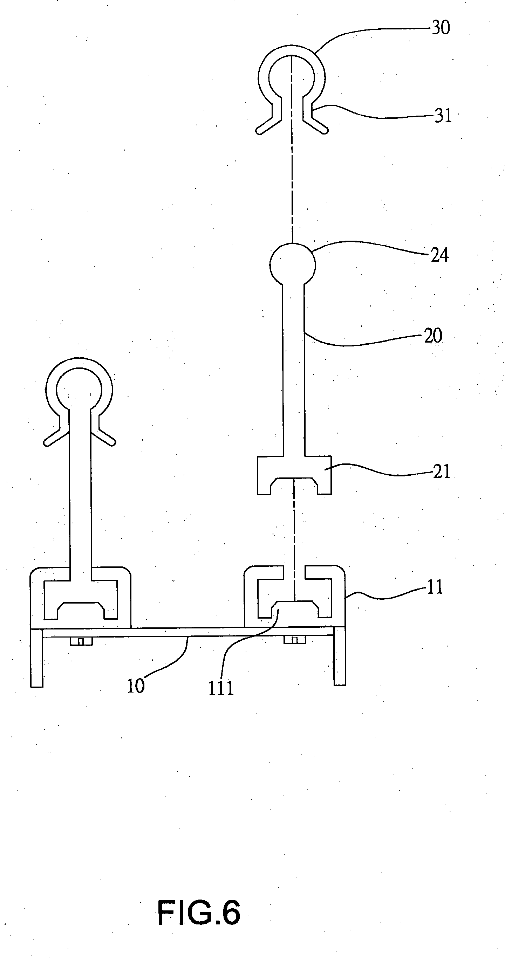

As shown in Figs. 5 and 6, two embodiments of the cable management units 20 are disclosed, wherein each of the cable management units 20 has the connection portion 21 which is slidably engaged with the rail 11 so that the cable management unit 20 is slidable along the rail 11. Fig. 5 shows the thin-plate type clip 30 connected to the cable management unit 20 so as to seal the opening 23. The connection portion 21 includes two resilient tabs 211 extending therefrom so that the connection portion 21 is easily engaged with the rail 11 by the resilient tabs 211. In Fig. 6, the curved clip 30 is connected to the cable management unit 20 and the engaging portion 24 is formed on the top of the cable management unit 20, so that the connection portion 21 is easily connected to the cable management unit 20 and seals the opening 23. Each rail 11 has a rib 111 extending therefrom to firmly set the cable management unit 20.

When the ports are the same type, the L-shaped boards 202 with the identical recesses 22 are used to save the assembly time and the cost of the material.

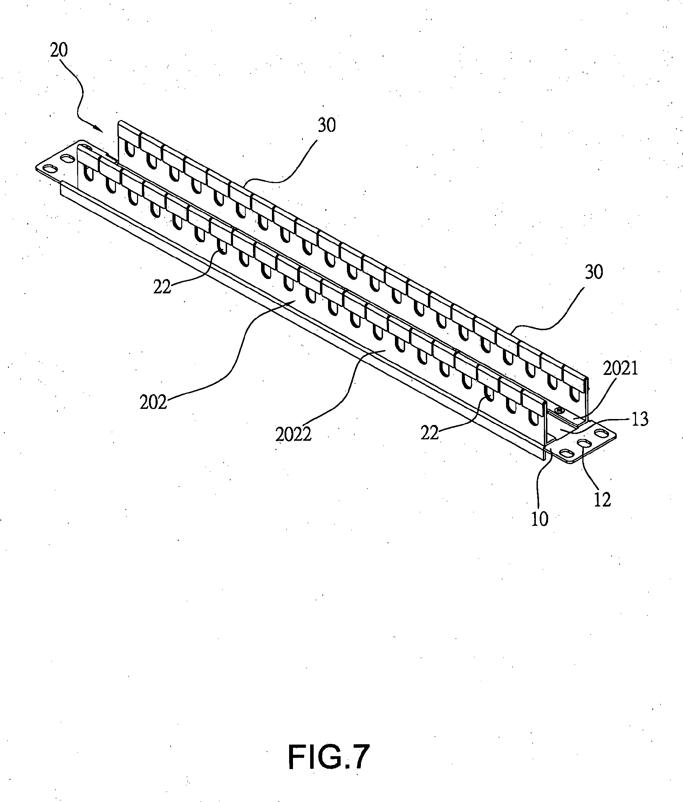

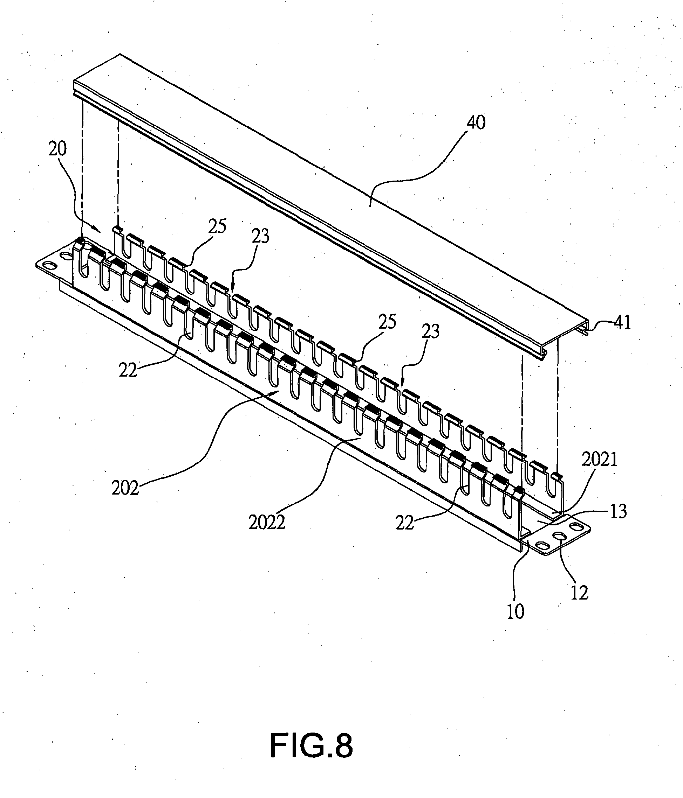

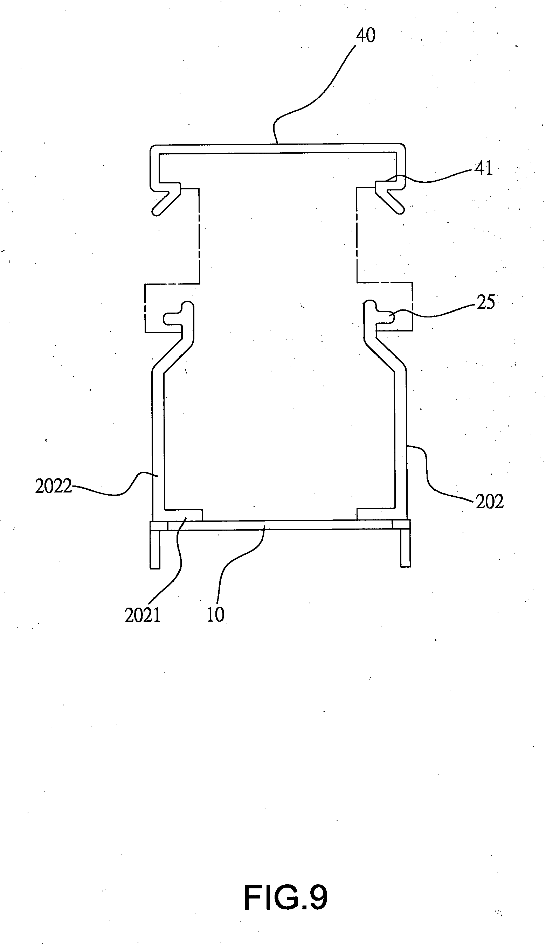

Referring to Figs. 7 to 9, yet another embodiment of the cable management device is disclosed and comprises a frame 10 and two cable management units 20. The frame 10 has multiple locking holes 12 defined in two sides thereof so that the frame 10 is connected to the chassis by the locking holes 12. The two respective sides of the two cable management units 20 are respectively connected to two sides of the frame 10. Each cable management unit 20 has multiple recesses 22 and each recess 22 communicates with an opening 23. In this embodiment, the cable management units 20 are L-shaped boards 202 and each of the L-shaped boards 202 has a base board 2021 and a side board 2022. The recesses 22 and the openings 23 are located at the side board 2022 for receiving the cables. As shown in Fig. 7, each of the two cable management units 20 has a clip 30 on the top thereof. Further referring to Figs. 5 and 6, each of the clips 30 has a clip portion 31 and each of the side boards 2022 has an engaging portion 24 located beside the opening 23 so that the clip portion 31 clips the engaging portion 24. By the engagement between the clip portion 31 and the engaging portion 24, the cable management units 20 are connected to the side boards 2022 and seal the openings 23. As shown in Figs. 8 and 9, a cover 40 has two hooked portions 41 and each of the side boards 2022 has a protrusion 25 which is located beside the opening 23 of each of the side boards 2022 so that the hooked portions 41 are engaged with the protrusion 25. The cover 40 seals the openings 23. The frame 10 has at least one hollow portion 13 to have better ventilation and increase the efficiency of heat dissipation.

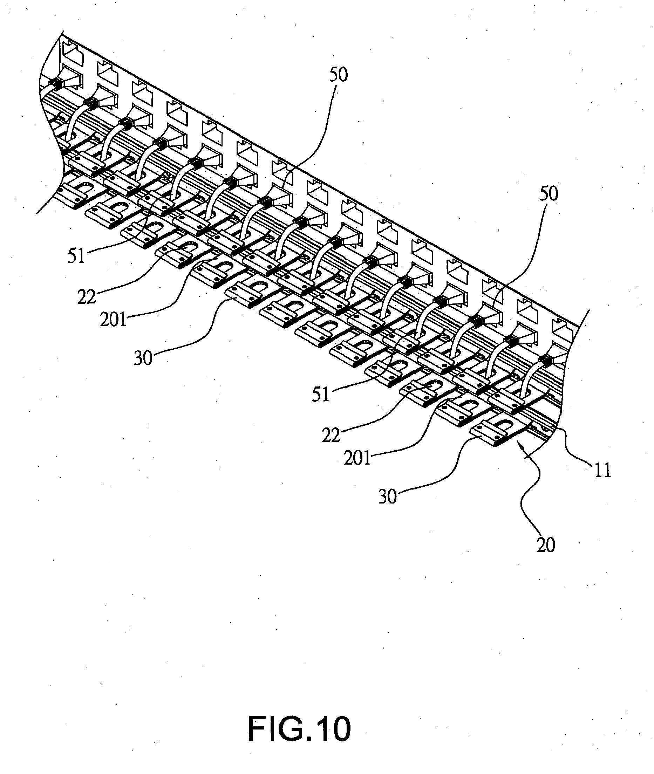

As shown in Fig. 10, when in use, the management boards 201 are chosen by the types of ports 50, the sizes of the cables 51 and the number of the cables 51. The management boards 201 are engaged with the rails 11 one by one and the cables 51 then extend through the recesses 22.The cable management device of the present invention used in a chassis can meet requirements of the cables 51 and the ports 50, and each cable 51 extend through the individual recess 22, so that the cables 51 are not in contact with each other. The applicant names the arrangement as the Per PORT Designed.

While we have shown and described the embodiment in accordance with the present invention, it should be clear to those skilled in the art that further embodiments may be made without departing from the scope of the present invention.

## Claims

1. A cable management device comprising:
a frame (10) adapted to be connected to a chassis, and two board-like cable management units (20) respectively connected to two sides of the frame (10), each cable management unit (20) having multiple recesses (22) and each recess (22) communicating with an opening (23) which is located away from the frame (10),
**characterized in that**
the frame (10) has two rails (11) and the two cable management units (20) are respectively and slidably engaged with the two rails (11).

2. The device as claimed in claim 1, wherein each of the cable management units (20) has a connection portion (21) which is slidably engaged with the rail (11) so that the cable management unit (20) is slidable along the rail (11).

3. The device as claimed in claim 2, wherein the connection portion (21) includes two resilient tabs (211) extending therefrom.

4. The device as claimed in any one of the preceding claims, wherein each of the cable management units has (20) multiple management boards (201) and each management board (201) has one recess (22) and one opening (23).

5. The device as claimed in claim 4, wherein each of the management boards (201) has a clip (30) clipped thereon and the clip (30) seals the opening (23).

6. The device as claimed in claim 5, wherein each of the clips (30) has a clip portion (31) and each of the management boards (201) has an engaging portion (24) to which the clip portion (31) clips.

7. The device as claimed in any one of the preceding claims, wherein the two cable management units (20) each are an L-shaped board (202) which has a base board(2021) and a side board (2022).

8. The device as claimed in claim 7, wherein the base board (2021) is connected to the frame (10).

9. The device as claimed in claim 7, wherein each of the two cable management units (20) has a clip (30) which is connected to the side board (2022) and seals the openings (23).

10. The device as claimed in claim 9, wherein each of the clips (30) has a clip portion (31) and each of the side boards (2022) has an engaging portion (24) to which the clip portion (31) clips.

11. The device as claimed in claim 7 further comprising a cover (40) which is connected to the side boards (2022) and seals the openings (23).

12. The device as claimed in claim 11, wherein the cover (40) has two hooked portions (41) and each of the side boards (2022) has a protrusion (25) which is engaged with the hook portion (41) corresponding thereto.

13. The device as claimed in any one of the preceding claims, wherein the frame (10) has at least one hollow portion (13).

## Patentansprüche

1. Kabelmanagementvorrichtung umfassend:
einen Rahmen (10), der geeignet ist, mit einer Chassis verbunden zu werden,
und zwei brettähnliche Kabelmanagementeinheiten (20), die jeweils an zwei Seiten des Rahmens (10) ausgebildet sind, wobei jede Kabelmanagementeinheit (20) mehrere Aussparungen (22) aufweist, und wobei jede Aussparung (22) mit einer Öffnung (23) kommuniziert, die vom Rahmen (10) weg angeordnet ist,
**dadurch gekennzeichnet, dass**
der Rahmen (10) zwei Schienen (11) umfasst und die zwei Kabelmanagementeinheiten (20) jeweils gleitfähig mit den zwei Schienen (11) im Eingriff sind.

2. Vorrichtung nach Anspruch 1, wobei jede der Kabelmanagementeinheiten (20) einen Verbindungsbereich (21) aufweist, der gleitfähig im Eingriff mit der Schiene (11) ist, sodass die Kabelmanagementeinheit (20) entlang der Schiene (11) verschiebbar ist.

3. Vorrichtung nach Anspruch 2, wobei der Verbindungsbereich (21) zwei elastische Streifen (211) aufweist, die sich von diesem erstrecken.

4. Vorrichtung nach einem der vorhergehenden Ansprüche, wobei jede der Kabelmanagementeinheiten (20) mehrere Managementplatten (201) und jede Managementplatte (201) eine Aussparung (22) und eine Öffnung (23) umfasst.

5. Vorrichtung nach Anspruch 4, wobei jede der Managementplatten (201) eine Klemme (30) umfasst, die auf diese geklemmt ist, und wobei die Klemme (30) die Öffnung (23) verschließt.

6. Vorrichtung nach Anspruch 5, wobei jede der Klemmen (30) einen Klemmbereich (31) und jede der Managementplatten (201) einen Eingreifbereich (24) aufweist, an welchem der Klemmbereich (30) klemmt.

7. Vorrichtung nach einem der vorhergehenden Ansprüche, wobei die zwei Kabelmanagementeinheiten (20) jeweils eine L-förmige Tafel (202) sind, welche eine Basistafel (2021) und eine Seitentafel (2022) aufweist.

8. Vorrichtung nach Anspruch 7, wobei die Basistafel (2021) mit dem Rahmen (10) verbunden ist.

9. Vorrichtung nach Anspruch 7, wobei jede der zwei Kabelmanagementeinheiten (20) eine Klemme (30) aufweist, die mit der Seitentafel (2022) verbunden ist und die Öffnungen (23) verschließt.

10. Vorrichtung nach Anspruch 9, wobei jede der Klemmen (30) einen Klemmbereich (31) und jede der Seitentafeln (2022) einen Eingreifbereich (24) aufweist, an welchem der Klemmbereich (31) klemmt.

11. Vorrichtung nach Anspruch 7, die weiterhin eine Abdeckung (40) umfasst, welche mit den Seitentafeln (2022) verbunden ist und die Öffnungen (23) verschließt.

12. Vorrichtung nach Anspruch 11, wobei die Abdeckung (40) zwei Hakenbereiche (41) aufweist und wobei jede der Seitentafeln (2022) einen Vorsprung (25) aufweist, welcher mit dem Hakenbereich (41), der diesem entspricht, im Eingriff ist.

13. Vorrichtung nach einem der vorhergehenden Ansprüche, wobei der Rahmen mindestens einen hohlen Bereich (13) aufweist.

## Revendications

1. Dispositif de gestion de câbles comprenant :
un cadre (10) adapté pour être relié à un châssis, et deux unités de gestion de câbles en forme de plaquette (20) reliées respectivement à deux côtés du cadre (10), chaque unité de gestion de câbles (20) comportant de multiples évidements (22) et chaque évidement (22) communiquant avec une ouverture (23) qui est située à une certaine distance du cadre (10),
**caractérisé en ce que**
le cadre (10) comporte deux rails (11) et les deux unités de gestion de câbles (20) sont en prise respectivement et de façon coulissante avec les deux rails (11).

2. Dispositif selon la revendication 1, dans lequel chacune des unités de gestion de câbles (20) comporte une partie liaison (21) qui est en prise de manière coulissante avec le rail (11) de sorte que l'unité de gestion de câbles (20) peut coulisser le long du rail (11).

3. Dispositif selon la revendication 2, dans lequel la partie liaison (21) comprend deux pattes élastiques (211) s'étendant à partir de celle-ci.

4. Dispositif selon l'une quelconque des revendications précédentes, dans lequel chacune des unités de gestion de câbles comporte (20) de multiples plaquettes de gestion (201) et chaque plaquette de gestion (201) comporte un évidement (22) et une ouverture (23).

5. Dispositif selon la revendication 4, dans lequel chacune des plaquettes de gestion (201) comporte une pince (30) clipsée sur celle-ci et la pince (30) ferme l'ouverture (23).

6. Dispositif selon la revendication 5, dans lequel chacune des pinces (30) comporte une partie pince (31) et chacune des plaquettes de gestion (201) comporte une partie engagement (24) sur laquelle la partie pince (31) vient se clipser.

7. Dispositif selon l'une quelconque des revendications précédentes, dans lequel les deux unités de gestion de câbles (20) sont chacune une plaquette en forme de L (202) qui comporte une plaquette de base (2021) et une plaquette latérale (2022).

8. Dispositif selon la revendication 7, dans lequel la plaquette de base (2021) est reliée au cadre (10).

9. Dispositif selon la revendication 7, dans lequel chacune des deux unités de gestion de câbles (20) comporte une pince (30) qui est reliée à la plaquette latérale (2022) et ferme les ouvertures (23).

10. Dispositif selon la revendication 9, dans lequel chacune des pinces (30) comporte une partie pince (31) et chacune des plaquettes latérales (2022) comporte une partie engagement (24) sur laquelle la partie pince (31) vient se clipser.

11. Dispositif selon la revendication 7, comprenant en outre un couvercle (40) qui est relié aux plaquettes latérales (2022) et ferme les ouvertures (23).

12. Dispositif selon la revendication 11, dans lequel le couvercle (40) comporte deux parties crochet (41) et chacune des plaquettes latérales (2022) comporte une saillie (25) qui est mise en prise avec la partie crochet (41) qui lui correspond.

13. Dispositif selon l'une quelconque des revendications précédentes, dans lequel le cadre (10) comporte au moins une partie creuse (13).
